# EUROPEAN PATENT SPECIFICATION

(11) **EP 2 791 852 B1**
(45) Date of publication and mention of the grant of the patent: **10.03.2021**
(21) Application number: 12795867.6
(22) Date of filing: 01.10.2012
(51) Int. Cl.: G06F 21/64, G06F 21/33, G06F 21/45

(54) **Credential Authentication Method**
Verfahren zur Authentifizierung der Zeugnisse
Méthode d'authentification des certificats

(30) Priority: 03.10.2011 IN 2863DE2011
(43) Date of publication of application: 22.10.2014
(73) Proprietor: CERTISAFE PRIVATE LIMITED, New Delhi 110015 (IN)
(72) Inventor: SHARMA, Smita, New Delhi 110027 (IN)
(74) Representative: Cabinet Chaillot
(86) International application number: PCT/IN2012/000657
(87) International publication number: WO 2013/051033

(56) References cited:
- US-A1- 2008 028 220
- US-A1- 2009 205 035
- MICROSOFT AND PING IDENTITY: "An Implementer's Guide to the Identity Selector Interoperability Profile V1.0", INTERNET CITATION, 1 April 2007 (2007-04-01), pages 1-74, XP007917180, Retrieved from the Internet: URL:http://download.microsoft.com/download /1/1/a/11ac6505-e4c0-4e05-987c-6f1d31855cd 2/identity-selector-interop-profile-v1-gui de.pdf [retrieved on 2011-02-15]
- ARUN NANDA: "Identity Selector Interoperability Profile V1.0", INTERNET CITATION, 1 April 2007 (2007-04-01), pages 1-52, XP007917181, Retrieved from the Internet: URL:http://download.microsoft.com/download /1/1/a/11ac6505-e4c0-4e05-987c-6f1d31855cd 2/identity-selector-interop-profile-v1.pdf [retrieved on 2011-02-15]
- EL MALIKI T ET AL: "A Survey of User-centric Identity Management Technologies", EMERGING SECURITY INFORMATION, SYSTEMS, AND TECHNOLOGIES, 2007. SECUREWARE 2007. THE INTERNATIONAL CONFERENCE ON, IEEE, PISCATAWAY, NJ, USA, 14 October 2007 (2007-10-14), pages 12-17, XP031338189, ISBN: 978-0-7695-2989-9
- Teemu Rissanen: "Electronic identity in Finland: ID cards vs. bank IDs", Identity in the Information Society, vol. 3, no. 1, 6 March 2010 (2010-03-06), pages 175-194, XP055373833, DOI: 10.1007/s12394-010-0049-8

## Description

### 2. Field of invention

2.1. CertiSafe is a process of generating a reusable, unique, electronic authentication ID for a Credential by the beholder in lieu of submission of paper based copies, attested or otherwise, where this unique CertiSafe ID is generated once and only once the Credential is authenticated by the source, i.e. the Issuer.
2.2. CertiSafe pertains to a process of avoiding fake credentials (known as copies) and also the reproduction of genuine credentials (also known as copies), both of which are unnecessary.
2.3. It is a method to maintain an online electronic repository of the Credentials of its users, i.e. 'Candidates'.
2.4. It is intended to provide convenience, in a secure manner, to all its actors viz. Candidates, Issuers and Requestors.

### 3. Background of invention with regard to the drawback associated with known art

3.1. This invention is intended to give the institutions a simple and secure way to identify the fake credentials without much effort, since each institution could be in a position to see the authentication status of each credential. Based on this, an informed decision could be taken by the institution, without leaving anything to chance.
3.2. This invention is also intended to replace the current practices of attaching paper copies of credentials as proofs achievements as and when a candidate applies to an institution. This institution may be academic or research based or professional or employment based or a government body or a non - government body etc.
   3.2.1. These credentials serve their purpose in due diligence, but also ::
      3.2.1.1. Use huge amounts of paper to make these credential copies
      3.2.1.2. Occupy huge spaces in storage cabinets that are then discarded after a few years
      3.2.1.3. Maintaining the stored credentials itself becomes a challenging task and retrieving large voluminous files is also a challenge in itself.
      3.2.1.4. Potential to become a security nuisance since the discarded copies have misuse potential.
3.3. Other than this humungous amount of wastage of paper, there is also a large wastage of time. The candidate has to get a copy made, get it attested at times by someone credible, and then post / courier these copies.
3.4. Further, CertiSafe system intends to make redundant the practice of getting these paper copies 'attested' or validated by the issuing institution and / or through a specified set of officials (government or non - government) or public notaries.
   3.4.1.CertiSafe also makes redundant the practice of self - attestation, which is not valid in any case and a practice that has risen from the 'innocent unless proven guilty' philosophy, since a person intent on committing a fraud through fake credentials would not have the morality levels that make him stop to self - attest.
3.5. Issues seen with the current Credential authentication practice are detailed in Annexure - 1.

US patent No. 2009/205035 A1 discloses an info card selector reception of identity provider based data pertaining to info cards. Patent application US2008028220 A1 discloses a system allowing to check the authenticity of a credential such as a high-school diploma in an online manner.

"An Implementer's Guide to the Identity Selector Interoperability Profile V1.0" Internet Citation (retrieved from the Internet : URL:http://download.microsoft.com/download/1/1/a/11ac6505-e4c0-4e05-987c-6f1d31855cd2/identity-selector-interop-profile-v1-guide.pdf) and "Identity Selector Interoperability Profile V1.0" Internet Citation (retrieved from the Internet : URL:http://download.microsoft.com/download/1/1/a/11ac6505-e4c0-4e05-987c-6f1d31855cd2/identity-setector-interop-profite-v1.pdf) disclose Microsoft(R) CardSpace product and the process of requesting and generating a security token.

"A Survey of User-centric Identity Management Technologies", EL MALIKI T ET AL (Emerging Security Information, Systems, and Technologies, 2007, Secureware 2007, The International Conference On, IEEE, Piscataway, NJ, USA, 14 October 2007) discloses user-centric identity management technologies.

### 4. Object of invention

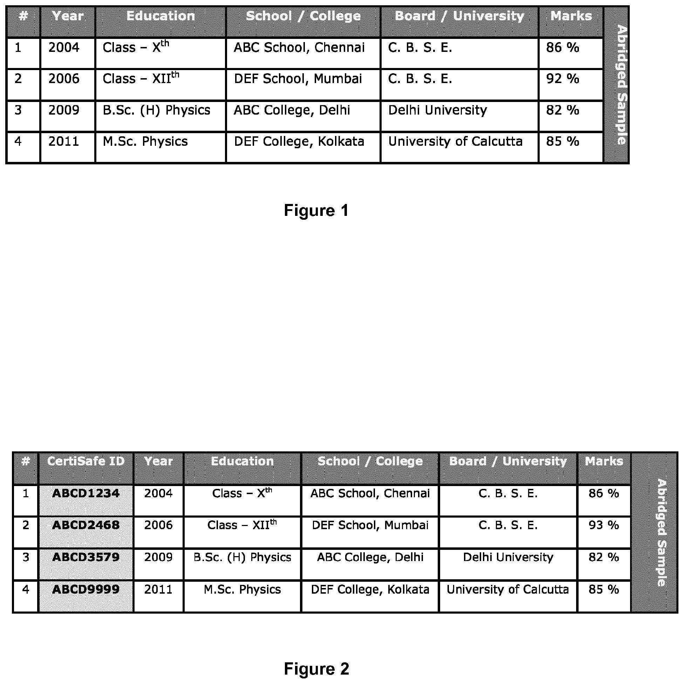

4.1. The principal object of the invention is the 'CertiSafe' program. This program enables the 'Requestor' to seek the authentication status of the credentials provided by a 'Candidate', that have been issued by an 'Issuer'. The entire process is governed by the workflow based CertiSafe system that binds all these roles together.
4.2. Another object of the invention is the reusable, unique, electronic authentication ID known as the CertiSafe ID, which is issued for each unique Credential, once and only once the Credential is authenticated by the Issuer and is thus bonafide of the Candidate. The Candidates and Requestors can use this CertiSafe IDs repeatedly for multiple institutions, in lieu of paper based copies (attested or not). This is explained through Figures 1 and 2.
4.3. Additional object of this invention is the creation of an electronic repository of Credentials of the users, viz. the Candidates.
4.4. A further object of this invention is the underlying principle for CertiSafe, viz. the Identity Lifecycle Management (ILM).

### 5. Statement of invention

**5.1.** CertiSafe is a novel Credential Authentication Process and System (CAPS) that aims to make redundant the need of attaching copies of Credentials (including attested and / or validated) by a Candidate when applying to an institution. This is done be seeking authentication from the source of the Credential itself, viz. The Issuer, who alone has the recorded information on the issuance of the Credential. This in turn also ensures that the opportunity of a fake credential being used by a Candidate becomes infinitesimal. It also ensures that the Identity Lifecycle Management is secured for a Candidate by being managed personally by the Candidate itself (ILM).

### Brief description of the drawings

Figure 1 is an abridged application form, without CertiSafe ID ;
Figure 2 is an abridged application form, with CertiSafe ID, according to the present invention
Figure 3 is a graphical representation of the current credential usage practice ;
Figure 4 is a graphical representation of CertiSafe method according to the present invention; and
Figure 5 is a process flow diagram explaining CertiSafe according to the present invention.

### 6. A summary of invention

6.1. CertiSafe is a novel Credential Authentication Process and System (CAPS) where in an electronic repository is created by the Candidates for themselves.
6.2. Each of the credentials mentioned is then requested for authentication through a workflow to the institution that has issued the credential.
   6.2.1. Once and only once the Issuer authenticates the said credential, a unique CertiSafe ID is generated.
6.3. The candidates could thus use this CertiSafe ID in the application form (physical or electronic) in lieu of attaching attested / verified copies of the credentials along with the application to an institution. An example is shown in Figures - 1 & 2.
   1
      6.3.1. The Candidate has to compulsorily attach copies of credentials, attested / authenticated or otherwise. Most of the times, the Candidate has to also show the credential in original to the Institution being applied to, even after the attestation has been obtained from an officer with attestation authority or a public notary.
   2
      6.3.2. Once the Candidate has the CertiSafe ID generated for the Credentials, the Candidate has to simply mention the CertiSafe ID in the application form as shown above. The need for copies of Credentials, attested / authenticated or otherwise, thus becomes completely redundant.
   6.3.3.CertiSafe is a novel method that can also safe keep the credentials of individuals. This has been explained in detail in Section 8.1.4.3.2.4.
6.4. Requestors can then easily seek the authentication status of the candidate's credentials by logging on to the CertiSafe System through their registered account.
6.5. CertiSafe thus provides its users the ability to effectively and securely manage their Identities through its entire lifecycle (Identity Lifecycle Management).

### 7. Graphical presentation of CertiSafe

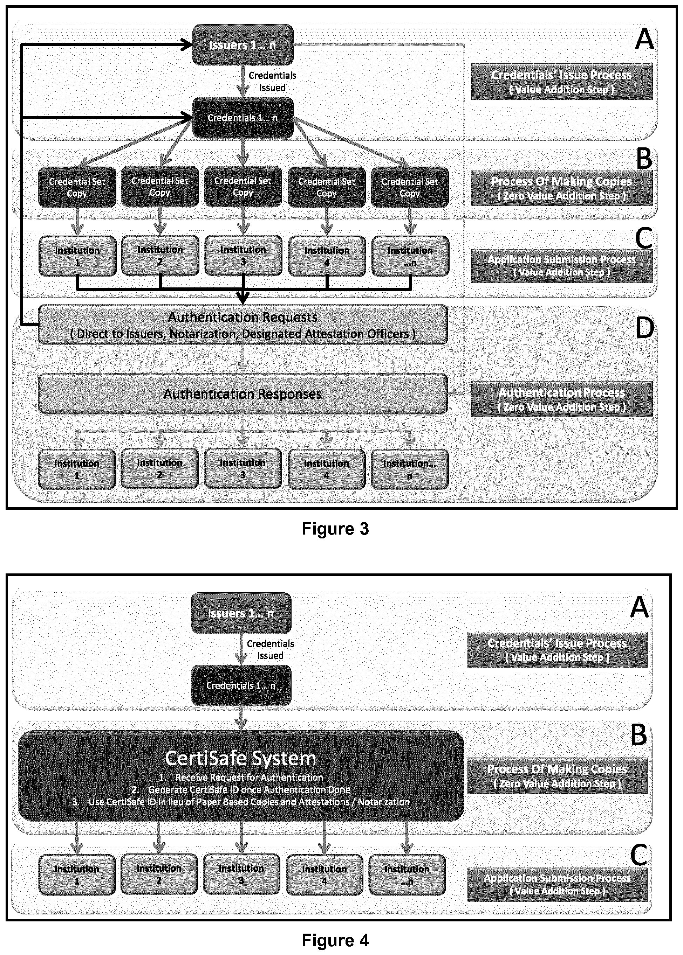

7.1. The current practice of Credential usage by the Candidates for myriad purposes is shown in Figure 3.
   3
   7.1.1. As can be seen that the current practice follows the 4 main steps
      7.1.1.1. Step A :: A Credential is issued by the Issuer to a Candidate.
      7.1.1.2. Step B :: The Candidate then creates multiple sets of copies of all Credentials to advocate suitability to the Institution of choice.
      7.1.1.3. Step C :: Candidate then sends the requisite application (s) with the copies of all required Credential (s) to the Institution (s).
      7.1.1.4. Step D :: This is the authentication step, where the Institution (viz. Requestor) may ask the Candidate or the Issuer for confirmation on the authenticity of the credential. This step arises mostly when there is a doubt on the credibility of the Credential or there is a clash for the same position between multiple candidates or when it is a policy at the institution where the application has been given by the Candidate.
         7.1.1.4.1. The rest of the applications with all their credentials are deemed to true, based on trust and faith. Trust, that the applicant would not jeopardize selection / processing of application and Faith, that the previous Candidates have been true (or haven't got caught with fraud anywhere on these credentials).
         7.1.1.4.2. Currently, this authentication is usually done in the following ways ::
            7.1.1.4.2.1. Attestation :: The Original Credential is presented to an Attesting Officer who would compare the Copy of the same Credential. Once satisfied, the Attesting Officer then signs the Credential copy and also affixes a seal or stamp that signifies his / her attestation authority. This is by far the most common practice owing to its convenience.
               7.1.1.4.2.1.1. The drawbacks of this, however, are detailed in Annexure - I.
            7.1.1.4.2.2. Notarization :: Notarization is similar to the Officer Based Attestation, the only difference being the person attesting is a notified Public Notary. This is also a common practice, but not as popular as compared to Officer based attestation discussed above.
               7.1.1.4.2.2.1. The drawbacks of this are also detailed in Annexure - I.
            7.1.1.4.2.3. Validation :: A copy of the Credential is sent to the issuing institution ( Issuer) to validate the same.
               7.1.1.4.2.3.1. Though this is the correct way, but being time consuming and laborious, it is seldom done. Even if it is done, it is the application receiving institution who sends out the request mostly.
               7.1.1.4.2.3.1.1. Drawbacks and hindrances of this are also detailed in Annexure - I.
7.2. **CertiSafe** :: This inventive step, is able to circumvent the above hindrances in a novel manner. The workflow for CertiSafe is given below in Figure 4.
   4
   7.2.1. It can be seen from the Figure 4, that CertiSafe ::
   7.2.1.1. completely eliminates Step D (attestation / validation).
   7.2.1.2. replaces the Step B, thus eliminating the need for creating multiple sets of copies of all credentials.

### 8. Detailed description of the invention with reference to drawing/examples

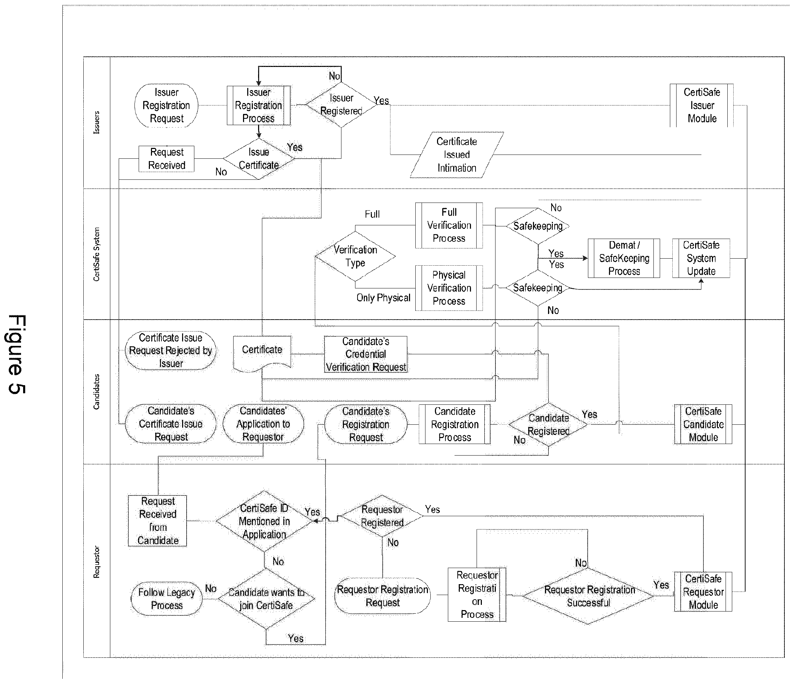

8.1. CertiSafe is a convenient and online system comprising of (but not limited to these alone) :: Actors, Objects, CertiSafe System and CertiSafe Touch Points, CertiSafe Links. These have been detailed below ::
   8.1.1. Identity Lifecycle management (I L M) :: Credentials chisel an individual's identity. It is imperative to not only grow one's credentials, but also to secure them. I L M is simply the straight line, time based milestone achievement that each of us goes through in the overall universe of equally abled and qualified individuals. The concept is two pronged ::
      8.1.1.1. Securing the Identity :: Through CertiSafe, Candidates would for the first time, get the ability to secure their identity. This is to thwart any attempt to create a fake Credential on the basis of a genuine one of a genuine individual (Candidate) or to even usurp the whole identity of a genuine individual (Candidate) as such.
         8.1.1.1.1. This is so much truly applicable to institutions as well whose equity is used by unscrupulous elements by targeting individuals (Candidates) of the renowned institutions (Issuers).
      8.1.1.2. Relational Identity :: CertiSafe would enable an individual to place oneself vis - a - vis the peer group in the whole universe (of CertiSafe Candidates). This placement would enable the Candidates to ::
         8.1.1.2.1. Help chart the future course of action.
         8.1.1.2.2. Make mid - course corrections on the steps already taken towards a brighter future.
         8.1.1.2.3. Understand the associated areas / additional qualifications of the peer group and / or the aspirational peer group.
         8.1.1.2.4. This would help the institutions (Issuers) too since they would get to fine tune the academics / curriculum based on the changing user (Candidates') preferences.
   8.1.2.Actors :: Any CertiSafe user can obtain either or all of the roles mentioned below, though it is recommended that users create multiple accounts for each role.
      8.1.2.1. Candidates :: who would enroll as a user, with Candidate work area as the choice and system defined associated responsibilities and privileges on the CertiSafe system. The candidate could be an individual or an organization, who would wish to have their credentials ::
         8.1.2.1.1. Authenticated or Validated by Issuer and / or CertiSafe.
         8.1.2.1.2. Kept in safe custody by CertiSafe.
         8.1.2.1.3. Be made available online to requestors, irrespective of the authentication status.
         8.1.2.1.4. Some of the key features available to Candidates are (but not limited to these alone) ::
            8.1.2.1.4.1. Privacy Lock :: Since Credentials are a key to an individual's identity, Candidates will have the option to show or hide their identity (and the credentials) to the specified users.
            8.1.2.1.4.2. Deferred Payment :: Candidates would own the CertiSafe ID as a service and hence would be expected to pay nominal charges for the same that would be based on multiple parameters. One of the parameters would be belonging to the economically weaker section of the society. Such candidates, based on the parameters set and met, could continue enjoying their CertiSafe ID without any or by paying partly for a specified time period.
      8.1.2.2. Issuers :: who would enroll as a user, with Issuer work area as the choice and system defined associated responsibilities and privileges, and has issued any kind of credential and is also registered as a user of the CertiSafe system, for example (but not limited to) ::
         8.1.2.2.1. Educational Bodies like schools, colleges, universities etc.
         8.1.2.2.2. Commercially oriented organizations like PSUs, private companies etc.
         8.1.2.2.3. Government agencies / departments / units etc.
         8.1.2.2.4. Non - Government Organizations etc.
         8.1.2.2.5. Profit based / Non - profit based organizations
         8.1.2.2.6. Standards certifying bodies etc.
         8.1.2.2.7. Individuals
      8.1.2.3. Requestor :: who would enroll as a user, with Requestor work area as the choice and system defined associated responsibilities and privileges, and who would want to know the authenticity of the claim (s) made by the candidate through his / her / their credentials. Just like the Issuers, Requestors could be any of the following (but not limited to these only) ::
         8.1.2.3.1. Educational Bodies like schools, colleges, universities etc.
         8.1.2.3.2. Commercially oriented organizations like PSUs, private companies etc.
         8.1.2.3.3. Government agencies / departments / units etc.
         8.1.2.3.4. Non - Government Organizations etc.
         8.1.2.3.5. Profit based / Non - profit based organizations
         8.1.2.3.6. Standards certifying bodies etc.
         8.1.2.3.7. Individuals
   8.1.3. Object :: is the credential that the Candidate claims to have been given by the Issuer.
      8.1.3.1. These credentials may itself be in any form - paper based or electronic.
      8.1.3.2. These credentials would be uploaded by the Candidate under his / her / their work area. The user would ::
         8.1.3.2.1. Use a template, if available, to fill details of the credentials that enable the Issuer to authenticate the credential with ease and without any doubt.
         8.1.3.2.2. Convert the credential into electronic format by scanning and then upload the same to the CertiSafe system. This is an optional step for the Candidate.
      8.1.3.3. The credentials include documents known as certificates, but not limited to them only. These credentials may be in the form of (but not limited to only these) ::
      8.1.3.4. Academic Achievements like (but not limited to) ::
         8.1.3.4.1. A Birth Certificate
         8.1.3.4.2. A Marriage Certificate
         8.1.3.4.3. A Degree (Bachelors, Masters, M.Phil, Doctorates etc)
         8.1.3.4.4. A Diploma
         8.1.3.4.5. A Scholarship Certificate
         8.1.3.4.6. Certificate of Merit
         8.1.3.4.7. A Marks Sheet
         8.1.3.4.8. Semester End Reports
         8.1.3.4.9. Transcripts
      8.1.3.5. Certificates in performing arts that have been issued by an institution (Arts / Academic / Government / Non - Government, etc.).
      8.1.3.6. Certificates in sports that have been issued by an institution (Sports / Academic / Government / Non - Government, etc.).
      8.1.3.7. Professional accomplishments that may have been issued by an institution ( Commercial / Testing / Government / Non - Government, etc.).
      8.1.3.8. Identification based credential like (but not limited to) ::
         8.1.3.8.1. A driving licence
         8.1.3.8.2. A passport
         8.1.3.8.3. An Identity Card, issued by an academic / professional / government / non - government body etc.
         8.1.3.8.4. Credentials of physical handicap or disability
         8.1.3.8.5. Credentials of belonging to a specified social strata with privileges like reservation, priority etc.
         8.1.3.8.6. Credentials of Accomplishments etc.
         8.1.3.8.7. Ownership credentials of a moveable / immovable property
         8.1.3.8.8. Employment credentials
         8.1.3.8.9. References
   8.1.4.CertiSafe System :: CertiSafe System is the common ground the Actors (Candidates, Issuers and Requestors) would meet and perform the workflow based, desired actions on the Object (Credentials). The Process Flow Diagram explaining CertiSafe is shown in Figure 5. A computer system with the following functions ::
      8.1.4.1. Primary Functions
         8.1.4.1.1. Provides login based secure access to all Actors. A unique ID would be provided to each user.
         8.1.4.1.2. Provides work area and associated privileges and responsibilities to each user type.
         8.1.4.1.3. Provides requisite workflows based on the requests raised and actions taken by users.
      8.1.4.2. User Based Functions
         8.1.4.2.1. Membership Request Module where users can select the type of role and privileges they wish to have in the CertiSafe System.
         8.1.4.2.2. Authentication Request module where users can request for different types of authentication available.
         8.1.4.2.3. Reports Module on parameters associated with a credential or a candidate or an institution or a requestor.
         8.1.4.2.4. Act On Behalf Module where an Issuer or requestor can request CertiSafe to perform certain actions on their behalf.
         8.1.4.2.5. SafeKeep Module where candidates can request CertiSafe to safe keep their credentials at CertiSafe Touch Points. Here the candidate can deposit the Credential with CertiSafe and also has the option of retrieving it.
         8.1.4.2.6. Search Module, which will be a parameter based search.
         8.1.4.2.7. Help Module to help guide each user role to perform the expected actions.
      8.1.4.3. Credential Authentication ::
         8.1.4.3.1. Full Authentication :: This process assures and ensures that ::
            8.1.4.3.1.1. Physical Authentication has been done, signifying the possession of the credential with the Candidate. This process has been detailed in Section 8.1.4.3.2.
            8.1.4.3.1.2. Online Authentication has also been completed for the credential, signifying that the credential was found to have genuinely been issued by the said Issuer. This process has been detailed in Section 8.1.4.3.3.
         8.1.4.3.2. Physical Authentication Only :: Purpose of this step is to ensure that the Credential has been verified to be present in physical form with the Candidate at the time of authentication.
            8.1.4.3.2.1. This is not a mandatory step in the CertiSafe system or to get a CertiSafe ID.
            8.1.4.3.2.2. This step can be done after the online verification also, meaning that there is no specific order to be followed to get the Full Authentication tag attached to a credential.
            8.1.4.3.2.3. This step can be carried out at the CertiSafe Touch Points, since it involves the physical credential.
            8.1.4.3.2.4. Candidates have the option to Safe Keep the credential with CertiSafe and also the option to retrieve the same.
               8.1.4.3.2.4.1. If Safe Keeping is chosen for a credential, the same would not be given back to the Candidate upon Physical Authentication and vice versa.
            8.1.4.3.2.5. In this process, the said credential undergoes the following steps ( but not limited to these alone) ::
               8.1.4.3.2.5.1. Candidate's ID is opened.
               8.1.4.3.2.5.2. Credential is Scanned.
               8.1.4.3.2.5.3. Scanned image is them uploaded in the CertiSafe system under the Candidate's ID.
               8.1.4.3.2.5.4. A CertiSafe ID is generated for the said credential.
               8.1.4.3.2.5.5. This ID is automatically tagged to the Candidate's ID.
            8.1.4.3.3. Online Authentication Only :: This step is initiated only once the same has been requested by the Candidate through CertiSafe Touch Points or through the online CertiSafe System.
               8.1.4.3.3.1. Online Authentication involves the following steps (but not limited to these alone) ::
               8.1.4.3.3.1.1. Scanned image is uploaded by the Candidate or by the CertiSafe Touch Point under the Candidate's ID.
               8.1.4.3.3.1.2. A CertiSafe ID is generated for the said credential.
               8.1.4.3.3.1.3. This ID is automatically tagged to the Candidate's ID.
               8.1.4.3.3.1.4. Check is made on the status of the participating institution.
                  8.1.4.3.3.1.4.1. If the said institution is also a registered user as an Issuer, the request for authentication is sent to the Issuer as per the communication link option chosen by the Issuer at the time of registration.
                     8.1.4.3.3.1.4.1.1. The institution then authenticates the requested credential based on the said institution's internal processes.
                     8.1.4.3.3.1.4.1.2. A CertiSafe ID is then issued to the Credential.
                     8.1.4.3.3.1.4.1.3. Candidate can use this CertiSafe ID going forward with the Institutions who accept the CertiSafe ID as the only form of true authentication.
                  8.1.4.3.3.1.4.2. If the said institution is not a registered user as an Issuer, the Candidate is notified and in parallel, a request sent to the institution (if the contact details are available) to register at the CertiSafe System.
                     8.1.4.3.3.1.4.2.1. Once the previously unregistered institution registers on the CertiSafe System, it can authenticate the request from the Candidate.
                     8.1.4.3.3.1.4.2.2. A CertiSafe ID is then issued to the Credential.
                     8.1.4.3.3.1.4.2.3. Candidate can use this CertiSafe ID going forward with the Institutions who accept the CertiSafe ID as the only form of true authentication.
   8.1.5.CertiSafe Touch Points :: These are the physical centers that act as the touch points to the Actors. This is to facilitate the users who do not have access to internet or require technical support to derive benefits out of the CertiSafe system. Some of the functions of the CertiSafe Touch Points are mentioned below (but are not limited to these) ::
      8.1.5.1. Candidate Registration :: Help candidates register on the CertiSafe System.
         8.1.5.1.1. Candidates who have registered online also have the option to avail of all services at the CertiSafe center
      8.1.5.2. Safe Keeping :: Requesting the CertiSafe System to Safe Keep the Credential.
      8.1.5.3. Credential Retrieval :: Requesting the CertiSafe System to retrieve the Safe Kept Credential and hand over the same to the Candidate.
      8.1.5.4. Self Service Kiosks :: Perform the user based functions at a self - service terminal provided for this purpose at the CertiSafe Touch Point.
   8.1.6.CertiSafe Links :: This section details the indicative linkages that the CertiSafe system would have with its different user types, viz. Candidates, Issuers and Requestors.
      8.1.6.1. However, these linkages are not limited to only these user groups and are set to include other Actors that would be added in the future.
      8.1.6.2. Also, the links mentioned below are also not the limited links and additional linkage options would be added to the CertiSafe system in the future.
      8.1.6.3. The indicative linkages are described below ::
         8.1.6.3.1. Candidate Linkages :: Candidates would be provided ample possibilities to link up with CertiSafe System. Some of them are given below (but not limited to these alone) ::
            8.1.6.3.1.1. Web Browser Based Link Up :: Enabling Candidates to access their account through popular web browsers like Internet Explorer, Chrome, Mozilla etc.
            8.1.6.3.1.2. Mobile Phone Link Up :: Here the Candidates could use the mobile phone browser like Opera Mini, Android, BlackBerry etc to access their account.
            8.1.6.3.1.3. App Link Up :: Users could download an App that they would be then required to install in their desktop or laptop or mobile phone or a tablet pc etc.
         8.1.6.3.2. Issuer Linkages ::
            8.1.6.3.2.1. Browsing Linkages :: Issuers, just like Candidates would be provided multiple linkage options through Web Browsers, Mobile Phones as well as through Apps that they can download and install at a device of their choice.
            8.1.6.3.2.2. Authentication Data Linkage :: Issuers, as per their role, would have the responsibility to authenticate a request from a Candidate. For this, they would be provided with the following options (but not limited to these alone) ::
               8.1.6.3.2.2.1. Synchronous Mode Data Link for Authentication :: These are of further three types ::
                  8.1.6.3.2.2.1.1. Direct Authentication :: Here the Issuers would be provided a direct secure link (like exchanging xml based messages) to make real time authentications without any human intervention. In this mode, the CertiSafe System would send out a request, through a secure link, to the Issuer's IT System. Based on the data available with the Issuer, if all specified parameters are found to be correct, the authentication would be completed and a CertiSafe ID issued.
                  8.1.6.3.2.2.1.2. Loaded Data Authentication :: Here the Issuers get the option to upload their electronic database on the credentials issued on to the CertiSafe system. This loaded data would be utilized in two ways ::
                     8.1.6.3.2.2.1.2.1. Instant Authentication :: If this mode is selected by the Issuer for authenticating credentials issued by them, then as and when a request from the Candidate is received, it would result in instant verification.
                     8.1.6.3.2.2.1.2.2. Issuer Guided Authentication :: In this mode, the Issuer has the option to authenticate the credential either through its own records available (at the issuing institution) offline or through the database that is already loaded on to the CertiSafe system by the Issuer.
                  8.1.6.3.2.2.1.3. Historical Data Authentication :: This mode would be utilized by the Issuer just like Issuer Guided Authentication as explained in Section 8.1.6.3.2.2.1.2.2, with the only difference being non - availability of any electronic record of these Credentials in the CertiSafe System, since they were never loaded in the CertiSafe System, since they were not available in electronic database form with the Issuer.
               8.1.6.3.2.2.2. Asynchronous Mode Data Link for Authentication :: In this mode, the Issuers have the option to send across their electronic database to the CertiSafe System through data storage devices like CD / DVD / removable drives etc. Once received, the entire data will be uploaded onto the CertiSafe System by CertiSafe team. Post this, the Issuers can follow the Loaded Data Authentication process as explained in Section 8.1.6.3.2.2.1.2.
               8.1.6.3.2.2.3. Offline Mode for Authentication :: This mode enables even those Issuers who do not have access to computers and maintain their Credential records completely on paper or are unwilling to perform an electronic authentication. In this mode, the following steps would be undertaken (but not limited to these only) ::
                  8.1.6.3.2.2.3.1. Send authentication request to the Issuer through regular post / mail.
                  8.1.6.3.2.2.3.2. Receive the authentication response from the Issuer.
                  8.1.6.3.2.2.3.3. Scan the response from the Issuer and upload it under the Candidate's Credential's CertiSafe ID.
                     8.1.6.3.2.2.3.3.1. If the authentication response is positive, mark the Credential as Authentication Confirmed and generate the CertiSafe ID.
                     8.1.6.3.2.2.3.3.2. If the authentication response is negative, mark the Credential as Authentication Rejected and cancel the CertiSafe ID.
         8.1.6.3.3. Requestor Linkages :: The Requestor would primarily have just the Browsing linkage, similar to Candidates and Issuers. The Requestors would be in a position to access the CertiSafe system through Web Browsers, Mobile Phones as well as through Apps that they can download and install at a device of their choice.

## Claims

1. Claim # 1 - A credential authentication method, comprising :
- a step wherein a credential is issued by an issuer to a candidate ;
- a step wherein the candidate registers with a credential authentication system;
- a step wherein the candidate submits the credential to the credential authentication system ;
- a step wherein the issuer registers with the credential authentication system;
- a step wherein the credential authentication system generates a reusable authentication ID for the credential, wherein the authentication ID is generated once the issuer of the credential authenticates online the credential by using the credential authentication system, wherein the authentication ID is a unique electronic ID and can be used repeatedly in lieu of paper based copies, attested or otherwise ;
- a step wherein the candidate submits the authentication ID to a requestor; and
- a step wherein the requestor uses the authentication ID on the credential authentication system to seek the authentication status of the submitted credential.

2. Claim # 2 - The credential authentication method according to claim 1, wherein the credential is paper based or electronic.

3. Claim # 3 - The credential authentication method according to one of claims 1 or 2, wherein the credential is an academic achievement such as a birth certificate, a marriage certificate or a degree, a sports certificate, a professional accomplishment, or an identification based credential such as a driving license, a passport or an identity card

4. Claim # 4 - The credential authentication method according to one of claims 1 to 3, wherein the credential authentication system includes an online electronic repository of the credentials of the candidate.

5. Claim # 5 - The credential authentication method according to one of claims 1 to 4, wherein each of the candidate, the requestor and/or the issuer links up with the credential authentication system via a web browser, a mobile phone browser and/or an application installed on a desktop, a laptop, a mobile phone and/or a tablet.

6. Claim # 6 - The credential authentication method according to one of claims 1 to 5, further comprising the step of requesting, by the candidate, the credential authentication system to safe keep the credential.

7. Claim # 7 - The credential authentication method according to one of claims 1 to 6, further comprising the step of managing online, by the candidate personally, the lifecycle of the credential on the credential authentication system.

8. Claim # 8 - The credential authentication method according to one of claims 1 to 7, wherein the candidate accesses the credential authentication system via physical centers that act as touch points.

9. Claim # 9 - The credential authentication method according to one of claims 1 to 8, wherein the candidate has the option to show or hide their identity to the specified users.

## Patentansprüche

1. Anspruch Nr. 1. Verfahren zur Authentifizierung eines Ausweises, umfassend:
- einen Schritt, in dem ein Ausweis von einem Aussteller an einen Kandidaten ausgestellt wird;
- einen Schritt, in dem sich der Kandidat in einem Ausweisauthentifizierungssystem anmeldet;
- einen Schritt, in dem der Kandidat den Ausweis dem Authentifizierungssystem vorlegt;
- einen Schritt, in dem sich der Aussteller im Ausweisauthentifizierungssystem anmeldet;
- einen Schritt, in dem das Authentifizierungssystem eine wiederverwendbare Authentifizierungskennung für den Ausweis erzeugt, wobei die Authentifizierungskennung erzeugt wird, sobald der Aussteller den Ausweis online unter Verwendung des Authentifizierungssystems authentifiziert, wobei die Authentifizierungskennung eine eindeutige elektronische Kennung ist und anstelle von beglaubigten oder sonstigen Kopien auf Papier einer wiederholten Verwendung zugänglich ist;
- einen Schritt, in dem der Kandidat die Authentifizierungskennung einer anfordernden Stelle vorlegt, und
- einen Schritt, in dem die anfordernde Stelle die Authentifizierungskennung auf dem Authentifizierungssystem verwendet, um den Authentifizierungsstatus des vorgelegten Ausweises einzusehen.

2. Anspruch Nr. 2. Verfahren zur Authentifizierung eines Ausweises nach Anspruch 1, wobei es sich beim Ausweis um einen Ausweis auf Papier oder einen elektronischen Ausweis handelt.

3. Anspruch Nr. 3. Verfahren zur Authentifizierung eines Ausweises nach einem der Ansprüche 1 oder 2, wobei es sich beim Ausweis um einen akademischen Leistungsnachweis wie z.B. eine Geburtsurkunde, Heiratsurkunde oder einen akademischen Grad, einen sportlichen Leistungsnachweis, einen beruflichen Leistungsnachweis oder einen Identitätsnachweis wie z.B. eine Fahrerlaubnis, einen Reisepass, oder eine Ausweiskarte handelt.

4. Anspruch Nr. 4. Verfahren zur Authentifizierung eines Ausweises nach einem der Ansprüche 1 - 3, wobei das Authentifizierungssystem ein elektronisches Online-Repository mit den Ausweisen des Kandidaten umfasst.

5. Anspruch Nr. 5. Verfahren zur Authentifizierung eines Ausweises nach einem der Ansprüche 1 - 4, wobei sich Kandidat, anfordernde Stelle und/oder Aussteller über einen Web-Browser, einen Browser eines Handys und/oder eine auf einem PC, Laptop, Handy und/oder Tablet installierte Anwendung mit dem Authentifizierungssystem verbindet.

6. Anspruch Nr. 6. Verfahren zur Authentifizierung eines Ausweises nach einem der Ansprüche 1 - 5, ferner umfassend Auffordern des Authentifizierungssystems zur sicheren Verwahrung des Ausweises durch den Kandidaten.

7. Anspruch Nr. 7. Verfahren zur Authentifizierung eines Ausweises nach einem der Ansprüche 1 - 6, ferner umfassend persönliches Verwalten des Lebenszyklus des Ausweises online auf dem Authentifizierungssystem durch den Kandidaten.

8. Anspruch Nr. 8. Verfahren zur Authentifizierung eines Ausweises nach einem der Ansprüche 1 - 7,
wobei der Kandidat über physische Zentren, die als Berührungspunkte fungieren, auf das Authentifizierungssystem zugreift.

9. Anspruch Nr. 9. Verfahren zur Authentifizierung eines Ausweises nach einem der Ansprüche 1 - 8, wobei
der Kandidat die Möglichkeit hat, den jeweils angegebenen Nutzern seine Identität zu zeigen oder zu verbergen.

## Revendications

1. Procédé d'authentification de justificatif d'identité, comprenant :
- une étape dans laquelle un justificatif d'identité est émis, par un émetteur, à un candidat ;
- une étape dans laquelle le candidat s'enregistre auprès d'un système d'authentification de justificatif d'identité ;
- une étape dans laquelle le candidat soumet le justificatif d'identité au système d'authentification de justificatif d'identité ;
- une étape dans laquelle l'émetteur s'enregistre auprès du système d'authentification de justificatif d'identité ;
- une étape dans laquelle le système d'authentification de justificatif d'identité génère un ID d'authentification réutilisable pour le justificatif d'identité, l'ID d'authentification étant généré une fois que l'émetteur du justificatif d'identité authentifie en ligne le justificatif d'identité en utilisant le système d'authentification de justificatif d'identité, l'ID d'authentification étant un ID électronique unique et pouvant être utilisé de manière répétée à la place de copies en papier, certifiées ou autres ;
- une étape dans laquelle le candidat soumet l'ID d'authentification à un demandeur ; et
- une étape dans laquelle le demandeur utilise l'ID d'authentification sur le système d'authentification de justificatif d'identité pour chercher le statut d'authentification du justificatif d'identité soumis.

2. Procédé d'authentification de justificatif d'identité selon la revendication 1, dans lequel le justificatif d'identité est en papier ou électronique.

3. Procédé d'authentification de justificatif d'identité selon l'une quelconque des revendications 1 ou 2, dans lequel le justificatif d'identité est une réussite académique tel qu'un certificat de naissance, un certificat de mariage ou un diplôme, un certificat sportif, un accomplissement professionnel, ou un justificatif d'identité basé sur une identification tel qu'un permis de conduire, un passeport ou une carte d'identité.

4. Procédé d'authentification de justificatif d'identité selon l'une quelconque des revendications 1 à 3, dans lequel le système d'authentification de justificatif d'identité comprend un magasin électronique en ligne des justificatifs d'identité du candidat.

5. Procédé d'authentification de justificatif d'identité selon l'une quelconque des revendications 1 à 4, dans lequel chacun du candidat, du demandeur et/ou de l'émetteur se connecte au système d'authentification de justificatif d'identité par l'intermédiaire d'un navigateur internet, d'un navigateur de téléphone mobile et/ou d'une application installée sur un ordinateur de bureau, un ordinateur portable, un téléphone mobile et/ou une tablette.

6. Procédé d'authentification de justificatif d'identité selon l'une quelconque des revendications 1 à 5, comprenant en outre l'étape de demande, par le candidat, au système d'authentification de justificatif d'identité de conserver en sécurité le justificatif d'identité.

7. Procédé d'authentification de justificatif d'identité selon l'une quelconque des revendications 1 à 6, comprenant en outre l'étape de gestion en ligne, par le candidat personnellement, du cycle de vie du justificatif d'identité sur le système d'authentification de justificatif d'identité.

8. Procédé d'authentification de justificatif d'identité selon l'une quelconque des revendications 1 à 7, dans lequel le candidat accède au système d'authentification de justificatif d'identité par l'intermédiaire de centres physiques qui jouent le rôle de points de service.

9. Procédé d'authentification de justificatif d'identité selon l'une quelconque des revendications 1 à 8, dans lequel le candidat a l'option de montrer ou de cacher son identité aux utilisateurs spécifiés.
